# EUROPÄISCHE PATENTSCHRIFT

(11) **EP 3 769 899 B1**
(45) Veröffentlichungstag und Bekanntmachung des Hinweises auf die Patenterteilung: **13.04.2022**
(21) Anmeldenummer: 20181473.8
(22) Anmeldetag: 22.06.2020
(51) Int. Cl.: B23K 26/08, B21C 37/22, B21C 37/26, B23K 26/282, B23K 26/302, F28F 1/00, B23K 26/06, F28F 1/24, B23K 101/14

(54) **VERFAHREN UND VORRICHTUNG ZUR HERSTELLUNG EINES RIPPENROHRES SOWIE SELBIGES**
FINNED TUBE AND METHOD AND DEVICE FOR PRODUCING A FINNED TUBE
PROCÉDÉ ET DISPOSITIF DE FABRICATION D'UN TUBE À AILETTES AINSI QUE TUBE À AILETTES

(30) Priorität: 28.06.2019 DE 102019117599
(43) Veröffentlichungstag der Anmeldung: 27.01.2021
(73) Patentinhaber: Schmöle GmbH, 58730 Fröndenberg (DE)
(72) Erfinder: Störmer, Gerhard, 58313 Herdecke (DE)
(74) Vertreter: Roche, von Westernhagen & Ehresmann

(56) Entgegenhaltungen:
- EP-A2- 3 243 598
- FR-A1- 2 704 166

## Beschreibung

Die Erfindung betrifft zunächst ein Verfahren zur Herstellung eines Rippenrohres (siehe zum Beispiel EP3243598, die die Grundlage für den Oberbegriff des Anspruchs 1 bildet), bestehend aus einem rundrohrartigen Rohrgrundkörper, welcher zur Verbesserung der Wärmetransfereigenschaften, vorzugsweise wendelförmig, mit einem Band berippt wird. Solche Rippenrohre werden in Wärmetauschern eingesetzt und typischerweise von einem Fluid, beispielsweise erwärmtem Wasser, durchlaufen. Die in derartigen Wärmetauschern eingesetzten Rippenrohre können selbst eine Wendelform aufweisen.

Aus dem Stand der Technik sind Verfahren zur Herstellung derartiger Rippenrohre hinlänglich bekannt. Typischerweise wird das Band hierbei mit Hilfe eines Lasers an dem Rohrgrundkörper verschweißt.

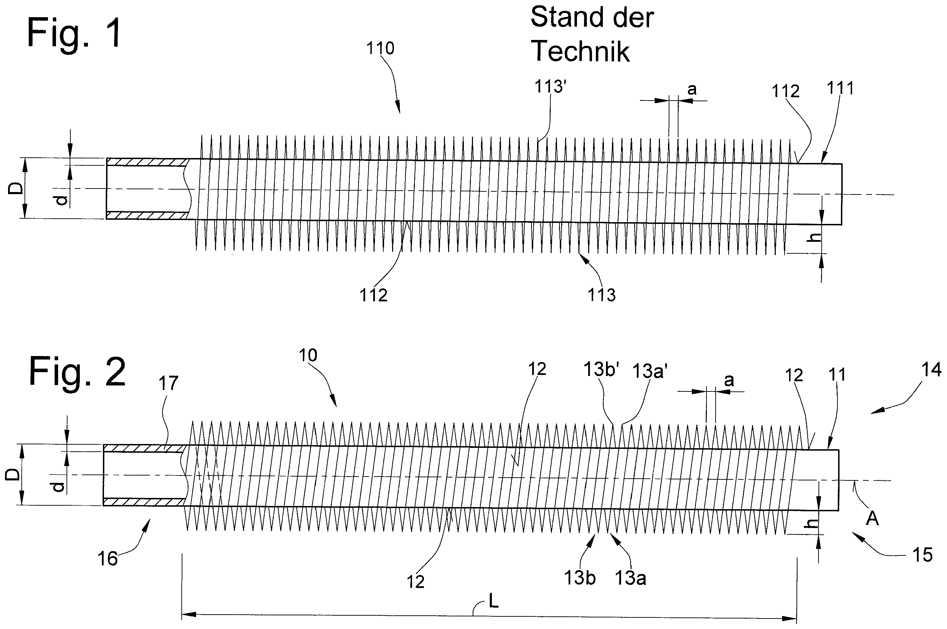

Ein Beispiel eines derartigen Rippenrohres 110 des Standes der Technik zeigt Fig. 1. Dort ist zu erkennen, dass das Rippenrohr 110 aus einem Rohrgrundkörper 111 besteht, welcher an seiner Außenseite 112 mit einem Band 113 berippt ist. Obwohl das Band 113 durchgehend ausgebildet ist, seien die in der Figur ersichtlichen einzelnen Abschnitte des Bandes der Einfachheit halber als Rippen 113' bezeichnet. Der Abstand zwischen zwei Rippen wird in Fig. 1 mit a bezeichnet, die Höhe der Rippen (also auch die Höhe des Bandes 113) mit h, der Durchmesser des Rohres mit D und die Wandstärke des Rohrgrundkörpers 111 mit d.

Im Stand der Technik besteht ein stetes Bestreben, die Herstellungszeiten eines derartigen Rippenrohres zu verkürzen.

Hierzu bestehen Überlegungen, die Rotations- und/oder Verlagerungsgeschwindigkeit des Rohrgrundkörpers während des Anbringens des Bandes (des sogenannten "berippens") zu erhöhen.

Aus physikalischen Gründen sind einer derartigen Erhöhung der Geschwindigkeit jedoch Grenzen gesetzt, da es insbesondere bei zu großen Rotationsgeschwindigkeiten aufgrund der auftretenden Kräfte zu einem Abreißen des Bandes kommen kann. Außerdem verhindern bei hohen Rotationsgeschwindigkeiten Rohrschwingungen ein präzises Verschweißen des Bandes.

Daher ist es eine Aufgabe der vorliegenden Erfindung, ein Verfahren breitzustellen, welches eine ökonomischere Herstellung von Rippenrohren ermöglicht.

Die vorliegende Erfindung löst diese Aufgabe mit einem Verfahren gemäß Patentanspruch 1 und ist daher insbesondere dadurch gekennzeichnet, dass der Rohrgrundkörper auf der Außenseite, insbesondere gleichzeitig, mit einem zweiten Band berippt wird, wozu das zweite Band an dem Rohrgrundkörper unter Einsatz eines zweiten Laserstrahls, insbesondere parallel zum ersten Band, befestigt wird.

Mit anderen Worten besteht die Idee der Erfindung darin, an Stelle eines einzelnen Laserstrahls mindestens zwei Laserstrahlen vorzusehen, was das (gleichzeitige) Anbringen von mindestens zwei Bändern am Rohrgrundkörper ermöglicht.

Somit kann ein Rippenrohr bei einem gleichbleibenden, vorgegebenen Abstand zweier benachbarter Rippen und vergleichbarer Rotationsgeschwindigkeit des Rohrgrundkörpers viel schneller fertiggestellt werden, insbesondere da die Bänder eine höhere Steigung aufweisen können (bei zwei Bändern beispielsweise doppelt so hoch wie bei dem Verfahren des Standes der Technik, bei welchem lediglich ein Band am Rippenrohr angeordnet wird), was vorzugsweise zu einer höheren Verlagerungsgeschwindigkeit führen kann.

Die Produktionszeit eines Rippenrohres kann hierdurch signifikant verkürzt werden.

Erfindungsgemäß ist vorgesehen, dass mindestens ein zweites Band befestigt wird. Von der Erfindung sind aber natürlich auch Fälle betroffen, bei welchen mehr als zwei Bänder (gleichzeitig) am Rohrgrundkörper angeordnet werden, beispielsweise drei oder vier oder sogar noch mehr Bänder.

Erfindungsgemäß ist weiterhin vorgesehen, dass jedes Band mit einem separaten Laserstrahl am Rohrgrundkörper befestigt, insbesondere verschweißt, wird. Hierbei können die Laserstrahlen tatsächlich gleichen Ursprungs sein, also beispielsweise von einem gemeinsamen Laser bereitgestellt werden, oder aber auch von mehreren Lasern stammen.

Der Laserstrahl kann von einem herkömmlichen Laser, wie einem Faserlaser oder auch einem CO₂-Laser oder sogar einem Laser mit blauem Licht bereitgestellt werden. Typischerweise werden die Laserstrahlen dabei von einem gemeinsamen Laser bereitgestellt und durch Wellenleiter, wie beispielsweise Glasfaserkabel oder ähnliches, an die jeweils benötigte Stelle geführt.

Beim Anbringen der Bänder am Rohrgrundkörper strahlen die Laserstrahlen typischerweise in den Kontaktbereich von Rohrgrundköper und Band ein, wobei beim Verschweißen vorzugsweise sowohl dem Kontaktbereich zugeordnetes Rohrgrundkörpermaterial als auch dem Kontaktbereich zugeordnetes Bandmaterial von dem betreffenden Laserstrahl bestrahlt und aufgeschmolzen wird.

Das Anbringen der Bänder erfolgt insbesondere im Wesentlichen gleichzeitig, was die oben beschriebene erfindungsgemäße Zeitersparnis unterstützt.

Die Bänder werden vorzugsweise parallel an dem Rohrgrundkörper angeordnet, derart, dass sie den Rohrgrundkörper wendelförmig, aber sich nicht kreuzend, umlaufen bzw. umgeben.

Insbesondere weisen sämtliche angebrachte Bänder die gleiche Steigung auf.

Erfindungsgemäß sind die Bänder dabei im Wesentlichen im selben Rippenrohrabschnitt angeordnet. Hiermit soll eine Abgrenzung zum Fall des Standes der Technik erfolgen, nach welchem ein Rippenrohr mit zwei nachfolgenden Bändern berippt wird (beispielsweise für den Fall, dass eine erste Bandquelle leer ist oder ähnliches).

In diesem Sinne bilden die Bänder erfindungsgemäß beispielsweise abwechselnd die Rippen des Rohres aus.

Mit anderen Worten werden die Rippen eines Abschnitts des Rippenrohres abwechselnd von den unterschiedlichen Bändern bereitgestellt. Die Bänder sind somit alternierend angeordnet und nicht einfach hintereinander befestigt (zum Ausbilden eines einzigen, durchgehenden Rippenbandes). Vielmehr sind die Bänder erfindungsgemäß vorteilhafterweise ineinander verflochten.

Gemäß einer vorteilhaften Ausgestaltung der Erfindung bestehen sämtliche Bänder aus demselben Material, stammen insbesondere von derselben Quelle. Beispielsweise kann zur Bereitstellung der Bänder jeweils ein Edelstahlspaltband genutzt werden, welches für mehrere Bänder von derselben Rolle abgeschnitten sein kann.

Vorzugsweise bestehen die Bänder aus Edelstahl. Grundsätzlich sind von der Erfindung aber auch Bänder umfasst, welche aus Kupfer oder Aluminium bestehen. Auch wenn es vorteilhaft ist, dass sämtliche Bänder aus demselben Material bestehen, so schließt dies doch nicht die Idee aus, Bänder unterschiedlichen Materials und/oder unterschiedlicher Höhe und/oder unterschiedlicher Dicke und/oder unterschiedlicher Form für das erfindungsgemäße Verfahren einzusetzen.

Typischerweise liegt das Bandmaterial jeweils in einer Endlos-Form (beispielsweise einer Rolle oder ähnlichem) vor und wird an den Rohrgrundkörper herangeführt, welcher typischerweise rotierend aufgehängt ist. Der Rohrgrundkörper kann die Bänder während des Berippungsvorgangs mitnehmen, derart, dass die Bänder, insbesondere unter Zug, im Wesentlichen wendelförmig an dem Rohrgrundkörper angelegt und dort von den Laserstrahlen verschweißt werden.

Nach Fertigstellung der Schweißnähte kann das gesamte Rippenrohr dann in eine endgültige Form, beispielsweise eine Wendelform oder auch eine Ω-Form überführt werden.

Die Laserstrahlen können den jeweiligen Kontaktbereich derart bestrahlen, dass die Bänder mit einer Seite, insbesondere mit einer unteren Schmalseite (bei einem beispielsweise rechteckigen Querschnitt), umlaufend an dem Rohrgrundkörper festgelegt und verschweißt werden. Es kann sich hierbei typischerweise um durchgehend homogene, unterbrechungsfreie Bänder handeln.

Bei dem Rohrgrundkörper handelt es sich im Wesentlichen um ein Rundrohr einer gewünschten Länge, welches während des Berippungsvorgangs typischerweise in einer geraden Form vorliegt. Der Rohrgrundkörper kann während des Berippungsvorgangs insbesondere rotieren, wozu er beispielsweise an seinen Enden eingespannt oder auf einen Dorn aufgebracht sein kann. Außerdem wird er beim Berippen naturgemäß in Axialrichtung verlagert.

Die Bänder können hierbei typischerweise quer zur Richtung der Längserstreckung des Rohrgrundkörpers (also tangential) an den Rohrgrundkörper herangeführt werden.

Im Gegensatz zu dem aus dem Stand der Technik bekannten Faserlasern mit einer Leistung von 10 kW schlägt die Anmelderin beispielsweise vor, Faserlaser mit geringeren Leistungen von weniger als 5 kW einzusetzen, um einen zu tiefen "Einbrand" im Kontaktbereich von Band und Rohrgrundkörper zu vermeiden.

Ein derartiger "Einbrand" könnte das Material im Bereich des Kontaktbereiches nämlich angreifbar machen, beispielsweise durch Schwächung, Korrosion oder ähnliches.

Gemäß einer vorteilhaften Ausgestaltung der Erfindung ist das Band streifenartig ausgebildet, liegt also zunächst in Streifenform vor. Des Weiteren ist es vorteilhaft, wenn der Querschnitt I-förmig ausgebildet ist, also im Wesentlich eine Rechteckform ausbildet. Eine solche I-Form weist der Streifen in Abgrenzung zu einer U-Form oder einer L-Form auf. Eine im Querschnitt I-förmige Ausgestaltung einer Rippe bietet den Vorteil einer optimalen Wärmeleitung und ermöglicht den Einsatz von weniger Rippenwerkstoff.

Auch kann vorgesehen sein, dass den bestrahlten Kontaktbereichen jeweils ein Kühlgas (oder auch ein gemeinsames Kühlgas aus einer gemeinsamen Quelle) zugeleitet wird. Die Zuleitung eines Gases ist aus dem Stand der Technik zwar hinlänglich bekannt, doch dient ein solches Gas bei bisherigen Bandmaterialien im Wesentlichen als Schutzgas und soll ein Korrosionsangriff verhindern. Gemäß der Erfindung kann vorliegend aber sogar ein Kühlgas eingesetzt werden.

Gemäß einer besonders vorteilhaften Ausgestaltung der Erfindung wird der Rohrgrundkörper auf der Außenseite mit mindestens einem weiteren (dritten) Band berippt, wozu das jeweilige Band dann am Rohrgrundkörper unter Einsatz jeweils eines Laserstrahls befestigt wird. Hierzu ist jedem der Bänder ein separater Laserstrahl zugeordnet. Vorzugsweise sind drei oder mehr Bänder vorgesehen, welche vorzugsweise alle parallel angeordnet sind. Erfindungsgemäß bietet sich ein Vorteil, wenn die Bänder im Wesentlichen gleichzeitig befestigt werden, vorzugsweise während der Rohrgrundkörper rotiert.

Gemäß einer weiteren vorteilhaften Ausgestaltung der Erfindung stammen die Laserstrahlen von derselben Quelle. Mit Laserstrahlen sind in diesem Sinne die Laserstrahlen gemeint, welche das erste und zweite Band am Rohrgrundkörper festlegen, vorzugsweise durch einen Laserschweißvorgang. Doch auch mehr als zwei Laserstrahlen können von derselben Quelle stammen, beispielsweise können weitere Laserstrahlen vorgesehen werden, welche weitere Bänder (gleichzeitig) befestigen.

Als Quelle kann insbesondere ein Laser dienen, vorteilhafterweise ein Faserlaser, welcher mehrere Laserstahlausgänge bedienen kann. In diesem Fall kann beispielsweise ein 4 kW-Laser vorgesehen sein, welcher vier Laserstrahlausgänge mit jeweils einem 1 kW bedient. Die Laserstrahlausgänge können in einer Vorrichtung zur Herstellung eines Rippenrohres verstellbar angeordnet sein. Hierzu sind sie mit der Quelle insbesondere über Lichtwellenleiter verbunden, beispielsweise über Glasfaserkabel oder ähnlichem.

Gemäß einem besonders vorteilhaften Verfahren werden die Bänder dem Rohrgrundkörper aus unterschiedlichen Zuführwinkeln zugeführt. Sind beispielsweise zwei Bänder vorgesehen, kann das erste Band dem Rohrgrundkörper unter einem ersten Winkel zugeführt werden, das zweite Band unter einem anderen Winkel. Gleiches gilt für weitere Bänder, welche dann über jeweils andere Winkel zugeführt werden können. Vorteilhafterweise sind zwischen zwei benachbarten Bändern, welche dem Rohrgrundkörper zugeführt werden, die Winkel stets gleich.

Zur Zuführung des Bandes kann die im Verfahren eingesetzte (erfindungsgemäße) Vorrichtung jeweils eine Zuführung für ein Band vorsehen. In diesem Sinne können mehrere Zuführungen vorgesehen sein. Diese Zuführungen können beispielsweise (Umlenk-) Wellen oder ähnliches umfassen.

Gemäß der bevorzugten Ausführungsform der Erfindung stehen die Bänder vor der Bestrahlung durch den jeweiligen Laserstrahl über einen im Wesentlichen gleichen Umfangswinkel mit dem Rohrgrundkörper in Kontakt. Wird ein erstes Band also beispielsweise über einen Winkel von 30° vom rotierenden Rohrgrundkörper mitgenommen, bevor es von dem zugeordneten Laserstrahl beaufschlagt wird, kann auch ein zweites Band über einen entsprechenden Winkel von etwa 30° von dem rotieren Rohrgrundkörper mitgenommen werden, bevor es von einem (anderen) Laserstrahl beaufschlagt wird. Gleiches gilt für weitere Bänder. Die Bänder stehen hierbei vorzugsweise unter Zug, werden also von dem rotierenden Rohrgrundkörper mitgenommen.

Im Sinne der Erfindung kann es besonders vorteilhafterweise vorgesehen sein, dass die Laserstrahlen in einem im Wesentlichen gleichen Winkel auf das jeweilige Band einstrahlen. Dieser Winkel bezieht sich dabei vorzugsweise auf die Längsachse des Rohrgrundkörpers (unabhängig davon können die Laserstrahlen natürlich rotatorisch in einem anderen Winkel angeordnet sein oder auch axial verschoben).

Entscheidend ist für den im Wesentlichen gleichen Winkel der Winkel innerhalb der Ebene, welche von dem Laserstrahl und der Längsachse des Rohrgrundkörpers aufgespannt wird. Betrachtet man jeweils diese Ebene, so sind die Einstrahlwinkel vorteilhafterweise im Wesentlichen gleich.

Dies hat den Vorteil, dass - je nach gewähltem Material und atmosphärischen Bedingungen - lediglich ein optimaler Einstrahlwinkel für einen der Laserstrahlen auf eines der Bänder gesucht werden muss. Die anderen Laser können dann bezüglich des beschriebenen Winkels einfach identisch ausgerichtet werden.

Weiterhin ist vorteilhafterweise vorgesehen, dass die Strahlauslässe der Laserstrahlen in Bezug auf den Rohrgrundkörper radial versetzt angeordnet sind. Dieser Radialversatz ist beispielsweise erkennbar, wenn man sich die Ebene orthogonal zur Längsachse des Rohrgrundkörpers anschaut. In dieser Ansicht ist ein entsprechender Radialversatz (unabhängig von einem gegebenenfalls ebenfalls vorliegenden Axialversatz) ersichtlich. Der Radialversatz bezieht sich also vorliegend auf den Rohrgrundkörper.

Der Radialversatz zwischen zwei Strahlenauslässen eines Laserstrahls kann beispielsweise 180° oder weniger betragen, weiter vorteilhafterweise weniger als 90°, weiter vorteilhafterweise weniger als 45°. Insbesondere können die Laserstrahlen hierbei, bezogen auf die Längsachse des Rohrgrundköpers in einem im Wesentlichen gleichen Winkel auf die jeweiligen Bänder einstrahlen (wie oben geschildert).

Ein Strahlauslass kann beispielsweise von dem Ende eines Lichtwellenleiters bereitgestellt werden oder von einem Laser selber (in diesem Sinne können die Laserstrahlen also aus derselben Quelle stammen oder aus unterschiedlichen, jeweils eigenen Quellen).

Weiter vorteilhafterweise kann von der Erfindung vorgesehen sein, dass die Strahlauslässe der Laserstrahlen in Bezug auf den Rohrgrundkörper axial versetzt angeordnet sind. Auch der Begriff "axial" ist in diesem Sinne vorzugsweise auf die Längsachse des Rohrgrundkörpers bezogen. Ein derartiger Axialversatz kann beispielsweise für den Fall vorteilhaft sein, dass lediglich ein geringer Radialversatz vorhanden sein soll (die Laserstrahlen im Wesentlichen auf dieselbe Seite des Rohrgrundkörpers einstrahlen).

Der Axialversatz entspricht dabei - je nach Anwendungsfall - beispielsweise dem Abstand der Bänder untereinander, welche mit den betreffenden Laserstrahlen festgelegt werden sollen, oder ist geringer als dieser oder gar größer als dieser.

Es ist hierbei anzumerken, dass die Laserstrahlen vorteilhafterweise bezüglich der Axialrichtung auf den Bereich des Rippenrohres abgegeben werden, in welchem sich das bereits festgelegte Band befindet. Mit anderen Worten geben die Strahlauslässe die Laserstrahlen in Bewegungsrichtung der festgelegten Bänder ab, mithin in Bewegungsrichtung des Rohrgrundkörpers.

Ein beschriebenes, erfindungsgemäßes Verfahren kann insbesondere von einer erfindungsgemäßen Vorrichtung gemäß Patentanspruch 8 durchgeführt werden.

In diesem Sinne löst die Erfindung die gestellte Aufgabe gemäß einem weiteren Aspekts mit einer Vorrichtung nach Patentanspruch 8, welche insbesondere dadurch gekennzeichnet ist, dass die Vorrichtung Zuführungen für mindestens zwei Bänder bereitstellt und mindestens zwei Laserstrahlen zur Befestigung der Bänder an demselben Rohrgrundkörper. In diesem Sinne weist die erfindungsgemäße Vorrichtung beispielsweise auch Strahlenauslässe für Laserstrahlen und/oder die Laser selber auf. Auch sind Führungen und Antriebe für den Rohrgrundkörper typischerweise von der Vorrichtung umfasst.

An dieser Stelle sei angemerkt, dass sämtliche Vorteile und Ausgestaltungen der voranstehend beschriebenen erfindungsgemäßen Verfahren selbstverständlich auf die erfindungsgemäße Vorrichtung gemäß Patentanspruch 8 übertragbar sind (jedenfalls soweit keine Widersprüche entstehen). Diese Vorteile sollen an dieser Stelle in Bezug auf die Vorrichtung lediglich aus Gründen der Übersichtlichkeit der Anmeldung allerdings nicht sämtlich wiederholt werden, sollen aber auch in Bezug auf die Vorrichtung als offenbart gelten. Gleiches gilt für die Patentansprüche und die in diesen genannten Merkmale.

Schließlich kann insbesondere durch ein erfindungsgemäßes Verfahren, insbesondere mit Hilfe der erfindungsgemäßen Vorrichtung, weiter ein Rippenrohr nach Patentanspruch 9 erstellt werden.

Patentanspruch 9 löst dabei die Aufgabe ein ökonomisch herstellbares Rippenrohr bereitzustellen. Patentanspruch 9 löst diese Aufgabe dabei insbesondere mit einem Rippenrohr, welches einen Rohrgrundkörper umfasst, der auf seiner Außenseite mit zwei oder mehr Bändern berippt ist. Insbesondere ist derselbe Bereich der Außenseite mit zwei oder mehr Bändern berippt.

Diese sind vorzugsweise parallel angeordnet. Die Bänder können dabei typischerweise aus Edelstahl bestehen (oder Kupfer oder Aluminium). Der Rohrgrundkörper besteht beispielsweise aus Kupfer (oder Aluminium oder Titan oder Edelstahl).

Mindestens zwei der zwei oder mehr Bänder können dabei eine unterschiedliche Höhe und/oder Breite und/oder Form aufweisen und/oder aus unterschiedlichem Material (z. B. rostfreiem und nicht-rostfreiem) bestehen.

An dieser Stelle sei darauf hingewiesen, dass auch bezüglich des erfindungsgemäßen Rippenrohres sämtliche voranstehenden Vorteile und Ausgestaltung als offenbart gelten sollen. Diese werden an dieser Stelle lediglich aus Gründen der Übersichtlichkeit der Anmeldung nicht noch einmal wiederholt.

Abschließend sei allerdings angemerkt, dass die mehreren Bänder des Rippenrohres nicht hintereinander, nach Art einer Reihenschaltung, bzw. separat an dem Rippenrohr angeordnet sind, sondern sich axial überlappen, was im Sinne der Erfindung bedeutet, dass die Bänder im Wesentlichen in einem gleichen Längsbereich angeordnet sind, beispielsweise parallel und/oder helixartig.

Weitere Vorteile der Erfindung ergeben sich aus den gegebenenfalls nicht zitierten Unteransprüchen sowie aus der nun folgenden Figurenbeschreibung.

Darin zeigen:
- Fig. 1: in einer sehr schematischen, teilgeschnitten Seitenansicht ein oben bereits beschriebenes Rippenrohr des Standes der Technik,
- Fig. 2: in einer Ansicht, etwa gemäß Fig. 1, ein erfindungsgemäßes Rippenrohr mit zwei separaten Bändern,
- Fig. 3: in einer abgebrochen dargestellten, seitlichen Schnittansicht ein Bereich des Rippenrohres gemäß Fig. 2 in einer vergrößerten Darstellung während des Befestigungsvorgangs, unter Einsatz von zwei Laserstrahlen, deren Strahlenauslässe einen Radialversatz von exemplarischen 180°, bei keinem Axialversatz, aufweisen,
- Fig. 4: in einer sehr schematischen, perspektivischen (Unter-) Ansicht der Aufwicklungsprozess zweier Bänder auf einen rotierenden Rohrgrundkörper,
- Fig. 5: in einer sehr schematischen Ansicht, etwa gemäß Ansichtspfeil V in Fig. 4, eine frontale, geschnittene Ansicht des Rohrgrundköpers samt Bändern und angedeuteten Laserstrahlauslässen,
- Fig. 6: in einer sehr schematischen Seitenansicht Ausschnitte aus unterschiedlichen Rippenrohren mit gleichem Rippenabstand, allerdings unter Nutzung einer unterschiedlichen Anzahl von Bändern, wobei Fig. 6a unter Einsatz eines Bandes ein Rippenrohr des Standes der Technik zeigt, Fig. 6b ein erfindungsgemäßes Rippenrohr unter Einsatz von zwei Bändern, und Fig. 6c ein erfindungsgemäßes Rippenrohr unter Einsatz von drei Bändern, sowie
- Fig. 7: in einer sehr schematischen Ansicht eine Mehrzahl von Laserauslässen, welche einer gemeinsamen Quelle zugeordnet sind.

Der nachfolgenden Figurenbeschreibung sei vorangestellt, dass gleiche oder vergleichbare Teile gegebenenfalls mit identischen Bezugszeichen versehen sind, teilweise unter Hinzufügung kleiner Buchstaben oder von Apostrophen. Gleiches gilt auch für die anschließenden Patentansprüche.

Anhand der Figuren 1 und 2 soll zunächst der grundsätzliche Unterschied eines erfindungsgemäßen Rippenrohres 10 im Vergleich zu dem bereits beschriebenen Rippenrohr 110 des Standes der Technik beschrieben werden: So erscheinen die Rippenrohre 110 des Standes der Technik gemäß Fig. 1 und das erfindungsgemäße Rippenrohr 10 gemäß Fig. 2 auf den ersten Blick nahezu identisch. Insbesondere weisen beide Rippenrohre 10 / 110 ein nahezu identischen Rohrgrundkörper 11 / 111 auf. Der Rohrgrundkörper 11 gemäß Fig. 2 kann beispielsweise aus Kupfer oder Aluminium oder auch Edelstahl bestehen.

Fig. 2 lässt des Weiteren erkennen, dass an der Außenseite 12 des Rohrgrundkörpers 11 ein erstes Band 13a festgelegt ist.

Obwohl der Rippenabstand a in den Ausführungsbeispielen gemäß Fig. 1 und Fig. 2 identisch ist, so lässt sich bei Betrachtung der Fig. 2 doch sofort erkennen, dass das Band 13a eine höhere (nämlich doppelt so hohe) Steigung aufweist, wie das Band 113 gemäß Fig. 1.

Dies lässt sich damit erklären, dass ausweislich Fig. 2 ein zweites Band 13b vorgesehen ist, welches parallel zum ersten Band 13a an der Außenseite 12 des Rohrgrundkörpers 11 angeordnet ist.

Aufgrund der Parallelführung der Bänder 13a und 13b, welche beide wendeiförmig bzw. helixartig um den Rohrgrundkörper herumgeführt sind, schneiden sich diese nicht, sondern verlaufen durchgehend im selben Abstand. Genau dies führt dazu, dass der Rippenabstand a im Vergleich zu dem Ausführungsbeispiel gemäß Fig. 1 gleich groß ist, wobei gemäß Fig. 2 zwei benachbarte Rippen 13a' und 13b' jedoch nicht zum selben Band gehören. Vielmehr wechselt sich die Rippenzugehörigkeit, beispielsweise an einer Seite 14 (welches Bezugszeichen im Ausführungsbeispiel gemäß Fig. 2 zum Beispiel die obere Seite des Rippenrohres 10 betrifft) ab, während beim Ausführungsbeispiel des Standes der Technik die Rippen auf einer Seite stets von demselben, dem einzigen Band bereitgestellt werden.

Das erfindungsgemäße Rippenrohr 10 ist gemäß Fig. 2 insbesondere derart ausgestaltet, dass die unterschiedlichen Bänder (in diesem Fall zwei an der Zahl) helixartig ineinander verflochten sind, ohne sich zu berühren. Mit anderen Worten sind in einem Längsbereich L des Rohrgrundkörpers 11 mindestens zwei Bänder angeordnet, welche sich sämtlich über die gesamte Länge des Längenbereiches L erstrecken (im Vergleich zu Ausführungen des Standes der Technik, bei welchen an einem Rohrgrundkörper 11 zwar auch zwei Bänder angeordnet sein können, aber dies dann lediglich hintereinander, nach Art einer Reihenschaltung).

Wie der Rippenabstand a gemäß dem Ausführungsbeispiel der Figuren 2 und 1 identisch ist, trifft dies auch für eine identische Ausführung des Rohrdurchmessers D, der Rohrwandstärke d, der Rippenhöhe h und der Längsachse A des Rohrgrundkörpers bzw. des Rippenrohres zu.

Auf diese Weise kann also ein andersartiges Rippenrohr als im Stand der Technik bereitgestellt werden, welches aber die gleichen Abmessungen und sogar den gleichen Rippenabstand aufweist, was insbesondere durch den Einsatz von mindestens zwei Bändern 13a und 13b erreicht wird, in Verbindung mit einer abweichenden Bandsteigung.

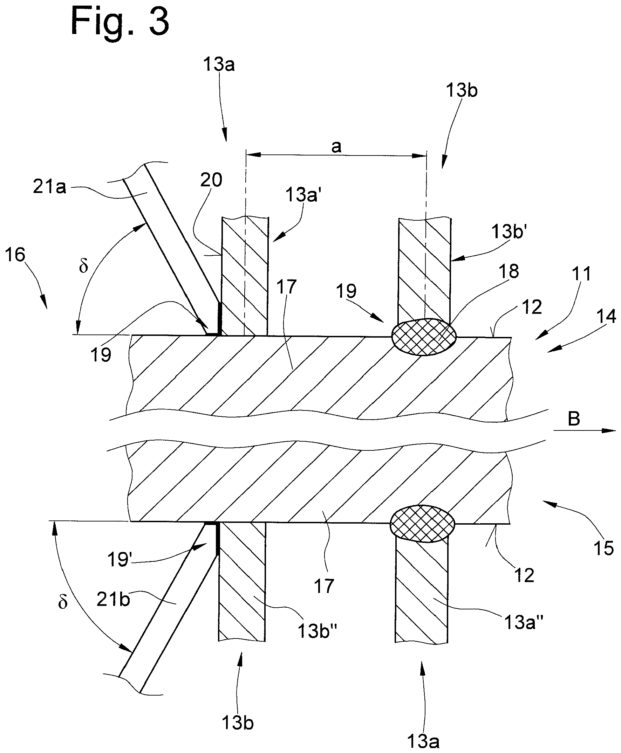

Fig. 3 zeigt dann in einer sehr schematischen Schnittansicht (jeweils) einen vergrößerten Bereich an der oberen Seite 14 des Rohrgrundkörpers 11 sowie an der unteren Seite 15. Die Rohrwand ist dabei mit dem Bezugszeichen 17 versehen und abgebrochen dargestellt, der Hohlbereich in der Mitte des Rohres aus Gründen der Übersichtlichkeit nicht dargestellt.

Fig. 3 zeigt insbesondere den Prozess des Laserschweißens, also des Anbringens der beiden Bänder 13a und 13b am Rohrgrundkörper 11 bzw. an dessen Außenseite 12.

Hierzu wird der Rohrgrundkörper 11 rotierend in eine Bewegungsrichtung B, nämlich entlang seiner Längsachse A, bewegt und die Bänder 13a und 13b werden dabei fortlaufend verschweißt.

Fig. 3 zeigt in ihrem oberen Darstellungsbereich, die obere Seite 14 des Rohrgrundköpers 11 betreffend, zunächst die Rippe 13b' im bereits verschweißten Zustand. Fig. 3 lässt dabei die bereits erstarrte Schmelze 18 im Kontaktbereich 19 zwischen Rohrgrundkörper 11 und Band 13b erkennen. Die Schmelze 18 besteht anteilig aus Material sowohl des Rohrgrundkörpers 11 als auch des Bandes 13b bzw. der Rippe 13b' (an deren Unterseite).

Die Rippe 13b' ist hierzu im Querschnitt in etwa rechteckig ausgebildet.

Die in Fig. 3 rechtsseitig dargestellte Rippe 13b' befindet sich in Bewegungs- oder Berippungsrichtung B (als bereits festgelegte Rippe) weiter vorne als eine in Fig. 3 ebenfalls dargestellte Rippe 13a' eines ersten Bandes 13a. Diese Rippe 13a' des Bandes 13a wird in Fig. 3 gerade in dem Kontaktbereich 19 (welcher aufgrund der linear-geraden Rohroberfläche bzw. -außenseite 12 und der geraden Seitenkante 20 der Rippe 13a' im Wesentlichen L-förmig ausgebildet ist) verschweißt.

Hierzu fällt ein erster Laserstrahl 21a, beispielsweise ein Faserlaserstrahl, unter einem Winkel δ auf den Kontaktbereich 19. Der Laserstahl 21a bestrahlt hierbei sowohl Material des Bandes 13a bzw. der Rippe 13a' als auch Material des Rohrgrundkörpers 11, insbesondere an dessen Oberfläche 12.

Zeitgleich zur Anbringung des Bandes 13a mit Hilfe des ersten Laserstrahls 21a wird das Band 13b ebenfalls an dem Rohrgrundkörper 11 befestigt, nämlich mit Hilfe eines zweiten Laserstrahls 21b. Hierzu strahlt der Laserstrahl 21b, im dargestellten Ausführungsbeispiel exemplarisch, an der unteren Seite 15 des Rohrgrundkörpers 11, also unter einem radialen Versatz von exemplarischen 180°, auf das Band 13b ein, nämlich auf die Rippe 13b". Auch dieser Laserstrahl 21b bestrahlt hierbei sowohl Material des Bandes 13b bzw. der Rippe 13b" als auch Material des Rohrgrundkörpers 11, nämlich in einem Kontaktbereich 19' (welcher ebenfalls im Wesentlichen L-förmig ausgebildet ist). Das Material wird aufgeschmolzen und hieraus entsteht dann die oben bereits beschriebene Schmelze 18, welche in Fig. 3 exemplarisch bezüglich der Rippe 13b' des Bandes 13b dargestellt ist.

Insofern befindet sich die Rippe 13b" in Berippungsrichtung B hinter der Rippe 13b' und stellt sozusagen den Zustand des Schweißens dar, während die Rippe 13b' den bereits fertigen, angeschweißten Zustand einer Rippe bzw. eines Abschnittes des Bandes 13b illustriert. Weitere Abschnitte des Bandes 13b bzw. weitere Rippen des Bandes 13b würden sich natürlich insbesondere in Berippungsrichtung B (und somit bereits verschweißt) mit definiertem Abstand anschließen.

Gleiches gilt naturgemäß für das erste Band 13a.

An dieser Stelle sei grundsätzlich angemerkt, dass in den Figuren, lediglich aus Gründen der Illustrierung, auf die einzelnen Rippen 13a', 13b', 13a" und 13b" Bezug genommen wird. Hierbei handelt es sich aber naturgemäß nicht um einzelne Körper, sondern jeweils um Abschnitte bzw. Teile des Bandes 13a oder Bandes 13b, welche lediglich in der Querschnittsansicht gemäß Fig. 3 separat erscheinen.

Auch ist anzumerken, dass der Radialversatz von etwa 180° der Laserstrahlen 21a und 21b lediglich aus illustratorischen Gründen gewählt wurde. In der Praxis ist dieser Versatz typischerweise sehr viel geringer.

Es ist jedoch festzustellen, dass die beiden Laserstrahlen 21a und 21b (sowie gegebenenfalls weitere vorhandene Laserstrahlen für weitere Bänder) vorteilhafterweise sämtlich im selben Winkel δ, bezogen auf die Längsachse A des Rohrgrundkörpers 11, auf das jeweilige Band einstrahlen. Dies erleichtert eine Ausrichtung der Laserstrahlen, da es genügt, eine Kalibrierung exemplarisch an einem der Strahlen vorzunehmen.

Der Winkel δ beträgt im Ausführungsbeispiel exemplarisch mehr als 45°. Ein großer Einstellwinkel kann insbesondere deshalb nötig werden, da die Bänder, wie später noch genauer beschrieben wird, über eine gewissen Umfangswinkel - unter Zug - vom Rohrgrundkörper 11 rotierend mitgenommen werden, bevor sie auf den jeweiligen Laserstrahl 21 treffen.

Abschließend sei zu Fig. 3 angemerkt, dass diese erkennen lässt, dass die Laserstrahlen 21 im Wesentlichen in Bewegungsrichtung B ausgerichtet sind, also in Richtung der Berippungsrichtung B strahlen. Die Laserstrahlen strahlen also sozusagen von dem Freibereich 16 weg. Dies betrifft jedenfalls eine Richtungskomponente der Laserstrahlen 21.

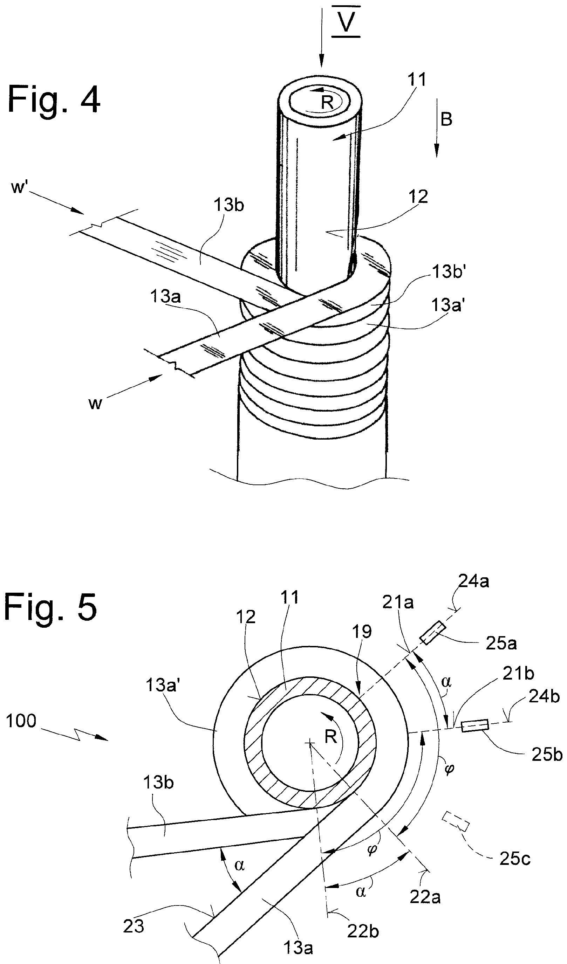

Fig. 4 verdeutlicht in einer perspektivischen, aber gleichfalls schematischen Ansicht das Bewickeln bzw. Berippen des Rohrgrundkörpers 11 mit den Bändern 13a und 13b. Bereits dieser Fig. 4 ist zu entnehmen, dass die Bänder 13a und 13b zunächst gerade, im Wesentlichen entlang einer Abwicklungsrichtung W bzw. W', auf den Rohrgrundkörper 11 zulaufen und diesen dann an seiner Oberfläche bzw. Außenseite 12 tangential kontaktieren.

Der Rohrgrundkörper 11 ist an seinen Enden - wie allerdings nicht dargestellt - typischerweise endseitig (maschinell) eingespannt, um diese drehend in Rotationsrichtung R anzutreiben. Zusätzlich erfolgt eine Linearbewegung in Richtung B. Der Rohrgrundkörper 11 kann bei diesem Antrieb die Bänder 13a und 13b mitziehen und diese, beispielsweise von jeweils einer Vorratsrolle oder einem Teller oder Bett (ebenfalls nicht dargestellt) gerichtet und unter einen definierten Zug-Bremskraftwirkung abziehen. Zusätzlich kann auch ein Antrieb für die Vorratsrollen (beispielsweise ein Spulenantrieb) vorgesehen sein.

Aufgrund dieser Zugkraft und einer gegebenenfalls vorhandenen Vorschubbewegung der Bänder 13a und 13b werden die Bänder 13a und 13b an der Oberfläche 12 des Rohrgrundkörpers 11 kontinuierlich und fortschreitend beaufschlagt. Die Beaufschlagung beginnt ausweislich Fig. 5 bezügliches des Bandes 13a etwa ab einem Bereich, welcher dort mit einer radialen Achse 22a gekennzeichnet ist, bzw. bezüglich des Bandes 13b etwa ab einem Bereich der dort mit einer radialen Achse 22b gekennzeichnet ist. Zwischen den beiden Achsen 22a und 22b besteht ein Winkel a. Dieser Winkel a entspricht genau dem Unterschiedswinkel α zwischen den Zuführrichtungen W und W' der Bänder 13a und 13b.

Die Bänder 13a und 13b liegen ab diesen Bereichen mit ihrer Unterseite kontaktierend an der Oberseite 12 des Rohrgrundkörpers 11 an. Infolge der Rotationsbewegung in Rotationsrichtung R laufen die Bänder 13a und 13b, sodann die Außenseite 12 des Rohrgrundkörpers 11 kontaktierend, jeweils über einen Winkelbereich ϕ mit dem Rohrgrundkörper 11 mit, bevor sie im Bereich einer mit 24a bzw. 24b bezeichneten radialen Achse jeweils von dem Laserstrahl 21a bzw. 21b mit dem Rohrgrundkörper 11 verschweißt werden.

In dem dargestellten Ausführungsbeispiel beträgt der Winkel ϕ jeweils ungefähr 90°. Er kann aber insbesondere etwa zwischen 30° und 120° betragen. Entscheidend ist hierbei, dass die Bänder 13a und 13b jeweils über einen gewissen Winkel ϕ mitgenommen werden, um einen idealen Zeitpunkt für das Verschweißen zu erreichen.

Die Laserstrahlen 21a und 21b entstammen dabei in Fig. 5 lediglich schematisch dargestellten Laserauslässen 25a bzw. 25b.

Diese Laserauslässe 25a und 25b können in dem Ausführungsbeispiel insbesondere einer gemeinsamen Quelle, beispielsweise einem gemeinsamen Laser (zum Beispiel einem Faserlaser), zugeordnet sein, der in Fig. 5 nicht dargestellt ist. Die Laserauslässe 25 können über nicht dargestellte Lichtwellenleiter auf später noch beschriebene Weise mit der Quelle verbunden sein.

Die Laserauslässe 25, und somit auch die Laserstrahlen 21, sind in Fig. 5 um einen Winkel α radial versetzt angeordnet. Dieser ist in dem Ausführungsbeispiel deutlich kleiner als 180°, was insofern der Darstellung der Fig. 3 widerspricht. Dies soll jedoch verdeutlichen, dass Fig. 3 lediglich aus Gründen der Übersichtlichkeit einen Winkel von 180° darstellt. Tatsächlich wird dieser Winkel typischerweise sehr viel geringer gewählt, nämlich beispielsweise wie in Fig. 5 dargestellt.

An dieser Stelle sei ebenfalls angemerkt, dass für den Fall, dass mehr als zwei Bänder 13a und 13b an dem Rohrgrundkörper 11 angebracht werden sollen, selbstverständlich noch mehr Laserauslässe (zum Beispiel der gestrichelt angedeutete Laserauslass 25c) in der Vorrichtung 100 vorhanden sein können.

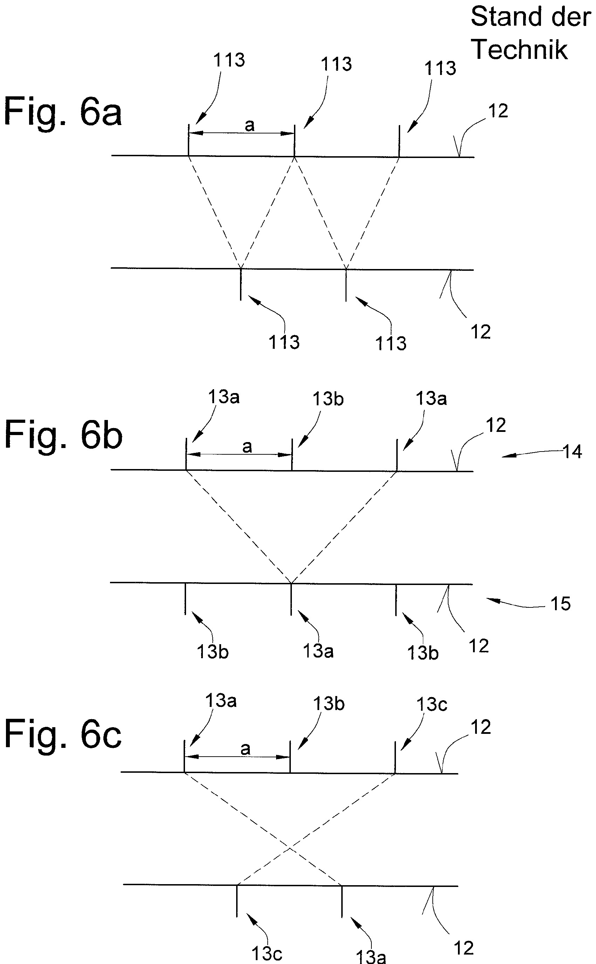

Als nächstes soll die Fig. 6 in einer sehr schematischen (nicht räumlichen oder ansichtlichen) Darstellung die Zugehörigkeit der einzelnen Rippen zu den jeweiligen Bändern darstellen. Rein schematisch ist in den Figuren 6a bis 6c jeweils die Anordnung der Rippen an der Außenseite 12 eines Rohrgrundkörpers angedeutet. Sämtliche Rippen in Fig. 6 haben dabei denselben Abstand a voneinander. Wie dies für eine unterschiedliche Anzahl von Bändern (nämlich ein Band bezüglich Fig. 6a, zwei Bänder bezüglich Fig. 6b und drei Bänder bezüglich Fig. 6c) hinsichtlich der Zuordnung der Rippen zu den einzelnen Bändern exemplarisch erreicht werden kann, zeigen die Fig. 6.

So zeigt Fig. 6a zunächst den Fall des Standes der Technik bei dem lediglich ein einzelnes Band eingesetzt wird. Hier gehören sämtliche dargestellten Rippen zu demselben, einzigen Band 113 (welche Zugehörigkeit rein schematisch durch die gestrichelte Linie verdeutlicht werden soll).

Fig. 6b zeigt dann den Fall des Einsatzes von zwei Bändern 13a, 13b, wie dies beispielsweise aus Fig. 3 hervorgeht: So weisen die einzelnen Rippen auch hier den Abstand a auf. Jeweils an der oberen bzw. unteren Seite 14 bzw. 15 gehören die Rippen jedoch immer abwechseln zu dem anderen der beiden Bänder 13a und 13b. Dies ist für das Band 13a, ebenfalls rein exemplarisch, durch eine gestrichelte Linie dargestellt, welche nicht den Rippenverlauf oder den Bandverlauf darstellen soll, sondern lediglich die Zugehörigkeit.

Bei dem Einsatz von drei Bändern 13a, 13b und 13c verdeutlicht die Fig. 6c analog ähnliches: So gehören die Rippen an der Ober- sowie auch der Unterseite des Rohrgrundkörpers immer jeweils abwechselnd zu einem der Bänder 13a, 13b oder 13c (exemplarisch ist hier neben einer Zugehörigkeit der Rippen des Bandes 13a auch eine Zugehörigkeit der Rippen des Bandes 13c gestrichelt angedeutet).

Hierbei können exemplarisch Versätze zwischen der Ober- und Unterseite des Rohres bezüglich der Rippenanordnung auftreten, was aber nicht so sein muss und nicht zuletzt durch den Radialversatz der Strahlauslässe beeinflusst wird.

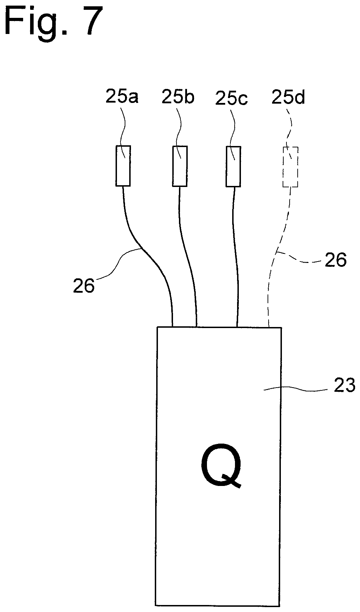

Schließlich verdeutlicht Fig. 7 eine grundsätzliche Zuordnung der Strahlauslässe 25 zu einer Quelle Q, welche in diesem Fall beispielsweise von einem Laser 23, zum Beispiel einem Faserlaser, bereitgestellt wird.

Fig. 7 verdeutlicht dabei, dass die erfindungsgemäße Vorrichtung beispielsweise drei Strahlauslässe 25a bis 25c vorsehen kann oder sogar noch mehr (diesbezüglich ist ein weiterer vierter Strahlenauslass 25d gestrichelt angedeutet). Diese sind bei einem Einsatz in einer erfindungsgemäßen Vorrichtung 100 allerdings nicht wie in Fig. 7 dargestellt parallel angeordnet, sondern werden je nach Anwendungsfall ausgerichtet.

Der Laser 23 kann seine Energie auf die Strahlenauslässe verteilen. Beispielsweise für den Fall, dass es sich bei dem Laser 23 um einen 4 kW-Laser handelt, würden die Strahlenauslässe 25a bis 25d jeweils eine Leistung von 1 kW bereitstellen.

Vorteilhaft ist bei einem derartigen System die flexible Anordnung der Strahlauslässe 25, welche über flexible Leitungen 26, beispielsweise nach Art von Lichtwellenleitern (wie Glasfasern), mit Laserlicht versorgt werden. Dies ermöglicht eine flexible Ausrichtung der Laserauslässe 25 relativ zum Rohrgrundkörper 11, wobei die Laserauslässe insbesondere radial versetzt angeordnet sein können (wie beispielsweise in Fig. 5 angedeutet). Alternativ oder zusätzlich können die Laserauslässe 25 aber auch axial versetzt zum Rohrgrundkörper 11 angeordnet werden (wobei sie weiterhin vorzugsweise über den gleichen Einstrahlwinkel δ auf die Bänder einwirken.

Alternativ zu Fig. 7 ist es selbstverständlich realisierbar, dass jeder Laserstrahl 21 von einem separaten Laser bereitgestellt wird. Dies ist von der Erfindung definitiv mit umfasst, wobei das Ausführungsbeispiel gemäß Fig. 7 eine gewisse vorteilhafte Flexibilität bietet.

## Patentansprüche

1. Verfahren zur Herstellung eines Rippenrohres (10), bei welchem ein Rohrgrundkörper (11) auf seiner Außenseite (12), insbesondere wendelförmig, mit einem ersten Band (13a) berippt wird, wozu das erste Band (13a) an dem Rohrgrundkörper (11) unter Einsatz eines ersten Laserstrahls (21a) befestigt wird, **dadurch gekennzeichnet, dass** der Rohrgrundkörper (11) auf der Außenseite (12), insbesondere gleichzeitig, mit einem zweiten Band (13b) berippt wird, wozu das zweite Band (13b) an dem Rohrgrundkörper (11) unter Einsatz eines zweiten Laserstrahls (21b), insbesondere parallel zum ersten Band (13a), befestigt wird.

2. Verfahren nach Anspruch 1, **dadurch gekennzeichnet, dass** der Rohrgrundkörper (11) auf der Außenseite (12), insbesondere gleichzeitig, mit mindestens einem weiteren, insbesondere dritten, Band (13c) berippt wird, wozu das jeweilige Band (13) an dem Rohrgrundkörper (11) unter Einsatz jeweils eines Laserstrahls (21) befestigt wird.

3. Verfahren nach einem der voranstehenden Ansprüche, **dadurch gekennzeichnet, dass** die Laserstrahlen (21) von derselben Quelle (Q), insbesondere demselben Laser (23), bereitgestellt werden.

4. Verfahren nach einem der voranstehenden Ansprüche, **dadurch gekennzeichnet, dass** die Bänder (13) dem Rohrgrundkörper (11) aus unterschiedlichen Zuführwinkeln- oder Richtungen (W, W') zugeführt werden.

5. Verfahren nach einem der voranstehenden Ansprüche, **dadurch gekennzeichnet, dass** die Bänder (13) vor der Bestrahlung durch die Laserstrahlen (21) über einen im wesentlichen gleichen Umfangswinkel (ϕ), insbesondere von mindestens 30 Grad, vorzugsweise mindestens 70 Grad, mit dem, insbesondere rotierenden, Rohrgrundkörper (11) in Kontakt stehen, vorzugsweise jeweils unter Zug.

6. Verfahren nach einem der voranstehenden Ansprüche, **dadurch gekennzeichnet, dass** die Laserstrahlen (21) in einem im wesentlichen gleichen Winkel (δ), insbesondere bezogen auf die Längsachse (A) des Rohrgrundkörpers (11), auf das jeweilige Band (13) einstrahlen.

7. Verfahren nach einem der voranstehenden Ansprüche, **dadurch gekennzeichnet, dass** die Strahlauslässe (25) der Laserstrahlen (21) im Bezug auf den Rohrgrundkörper (11) radial und/oder axial versetzt angeordnet sind.

8. Vorrichtung (100) zur Herstellung eines Rippenrohres (10), insbesondere zur Durchführung eines Verfahrens gemäß einem der voranstehenden Ansprüche, **dadurch gekennzeichnet, dass** die Vorrichtung (100) Zuführmittel für mindestens zwei Bänder (13) bereitstellt und mindestens zwei Laserstrahlen (21) zur Befestigung der Bänder (13) an demselben Rohrgrundkörper (11).

9. Rippenrohr (10), insbesondere hergestellt nach einem Verfahren gemäß einem der Ansprüche 1 bis 8, umfassend einen Rohrgrundkörper (11), insbesondere aus Kupfer oder Aluminium, welcher auf seiner Außenseite (12), insbesondere wendelförmig, mit zwei oder mehr sich axial überlappenden, insbesondere parallel angeordneten, Bändern (13) berippt ist.

## Claims

1. Method for producing a ribbed pipe (10), in which a pipe base body (11) is ribbed on its outside (12), in particular helically, with a first strip (13a), for which the first strip (13a) is fixed on the pipe base body (11) using a first laser beam (21a), **characterised in that** the pipe base body (11) is ribbed on the outside (12), in particular simultaneously, with a second strip (13b), for which the second strip (13a) is fixed on the pipe base body (11) using a second laser beam (21b), in particular in parallel to the first strip (13a).

2. Method according to claim 1, **characterised in that** the pipe base body (11) is ribbed on the outside (12), in particular simultaneously, with at least one further, in particular third, strip (13c), for which the respective strip (13) is fixed on the pipe base body (11) using a laser beam (21) in each case.

3. Method according to one of the preceding claims, **characterised in that** the laser beams (21) are provided by the same source (Q), in particular the same laser (23).

4. Method according to one of the preceding claims, **characterised in that** the strips (13) are supplied to the pipe base body (11) from different supply angles or directions (W, W').

5. Method according to one of the preceding claims, **characterised in that** the strips (13) are in contact with the, in particular rotating, pipe base body (11) via a substantially identical periphery angle (ϕ), in particular of at least 30 degrees, preferably at least 70 degrees, before irradiation by the laser beams (21), preferably under tension in each case.

6. Method according to one of the preceding claims, **characterised in that** the laser beams (21) radiate onto the respective strip (13) at a substantially identical angle (δ), in particular in relation to the longitudinal axis (A) of the pipe base body (11).

7. Method according to one of the preceding claims, **characterised in that** the beam outlets (25) of the laser beams (21) are arranged to be offset radially and/or axially in relation to the pipe base body (11).

8. Device (100) for producing a ribbed pipe (10), in particular for carrying out a method according to one of the preceding claims, **characterised in that** the device (100) provides supply means for at least two strips (13) and at least two laser beams (21) for fixing the strips (13) on the same pipe base body (11).

9. Ribbed pipe (10), in particular produced according to the method according to one of claims 1 to 8, comprising a pipe base body (11), in particular made of copper or aluminium, which is ribbed on its outside (12), in particular helically, with two or more axially overlapping strips (13), in particular arranged in parallel.

## Revendications

1. Procédé pour la fabrication d'un tube à ailettes (10), selon lequel un corps de base de tube (11) est nervuré sur sa face extérieure (12), en particulier en forme de spirale, avec une première bande (13a), la première bande (13a) étant fixée au corps de base de tube (11) à l'aide d'un premier faisceau laser (21a), **caractérisé en ce que** le corps de base de tube (11) est nervuré sur sa face extérieure (12), en particulier simultanément, avec une deuxième bande (13b), la deuxième bande (13b) étant fixée au corps de base de tube (11) à l'aide d'un deuxième faisceau laser (21b), en particulier parallèlement à la première bande (13a).

2. Procédé selon la revendication 1, **caractérisé en ce que** le corps de base de tube (11) est nervuré sur sa face extérieure (12), en particulier simultanément, avec au moins une autre, en particulier une troisième bande (13c), la bande en question (13) étant fixée au corps de base de tube (11) à l'aide d'un faisceau laser (21).

3. Procédé selon une des revendications précédentes, **caractérisé en ce que** les faisceaux laser (21) sont générés par la même source (Q), en particulier le même laser (23).

4. Procédé selon une des revendications précédentes, **caractérisé en ce que** les bandes (13) sont amenées au corps de base de tube (11) selon différents angles ou directions d'amenée (W, W).

5. Procédé selon une des revendications précédentes, **caractérisé en ce que** les bandes (13), avant l'irradiation par les faisceaux laser (21), sont mises en contact selon un angle circonférentiel (ϕ) sensiblement égal, en particulier d'au moins 30 degrés, de préférence d'au moins 70 degrés, avec le corps de base de tube (11), en particulier en rotation, de préférence sous tension.

6. Procédé selon une des revendications précédentes, **caractérisé en ce que** les faisceaux laser (21) irradient la bande correspondante (13) sous un angle (δ) sensiblement égal, en particulier par rapport à l'axe longitudinal (A) du corps de base de tube (11).

7. Procédé selon une des revendications précédentes, **caractérisé en ce que** les échappements (25) des faisceaux laser (21) sont disposés de façon décalée radialement et/ou axialement par rapport au corps de base de tube (11).

8. Dispositif (100) pour la fabrication d'un tube à ailettes (10), en particulier pour la mise en œuvre d'un procédé selon une des revendications précédentes, **caractérisé en ce que** ce dispositif (100) génère des moyens d'amenée pour au moins deux bandes (13) et au moins deux faisceaux laser (21) pour la fixation des bandes (13) sur le même corps de base de tube (11).

9. Tube à ailettes (10), en particulier fabriqué selon un procédé selon une des revendications 1 à 8, comprenant un corps de base de tube (11), en particulier en cuivre ou en aluminium, qui est nervuré sur sa face extérieure (12), en particulier en forme de spirale, avec deux bandes (13) ou plus se chevauchant axialement, en particulier disposées parallèlement.
